# FASCICULE DE BREVET EUROPEEN

(11) **EP 1 279 828 B1**
(45) Date de publication et mention de la délivrance du brevet: **28.06.2006**
(21) Numéro de dépôt: 02291758.7
(22) Date de dépôt: 11.07.2002
(51) Int. Cl.: F02N 11/04

(54) **Dispositif d'accouplement élastique entre le rotor d'une machine électrique et l'arbre vilebrequin d'un moteur thermique de véhicule automobile**
Nachgiebige Kupplung zur Verbindung des Rotors einer elektischen Maschine mit der Kurbelwelle des Verbrennungsmotors eines Kraftfahrzeugs
Elastic coupling between the rotor of an electric machine and the crankshaft of an internal combustion engine of a motor vehicle

(30) Priorité: 27.07.2001 FR 0110120
(43) Date de publication de la demande: 29.01.2003
(73) Titulaire: Peugeot Citroen Automobiles SA, 92200 Neuilly sur Seine (FR)
(72) Inventeur: Honorio, Francois, 95490 Vaureal (FR)
(74) Mandataire: Thinat, Michel

(56) Documents cités:
- EP-A- 1 112 884
- DE-A- 2 925 675
- DE-A- 10 017 398
- DE-A- 10 121 917
- DE-A- 19 943 049

## Description

La présente invention concerne un dispositif d'accouplement élastique entre le rotor d'une machine électrique tournante réversible et l'arbre vilebrequin d'un moteur thermique d'un groupe motopropulseur d'un véhicule automobile.

Selon une conception connue, la machine électrique est logée dans le carter d'embrayage du groupe motopropulseur et comprend un stator annulaire fixe relativement au carter d'embrayage et un rotor annulaire logé dans le stator fixe en étant solidaire d'un moyeu accouplé par des moyens d'accouplement au volant d'inertie entraîné en rotation par l'arbre vilebrequin du moteur thermique.

Ces moyens d'accouplement comprennent une couronne en matériau élastomère comprenant d'un côté un certain nombre d'éléments prismatiques creux à bases rectangulaires axialement saillants en étant circonférentiellement espacés de façon équidistante et s'encastrant respectivement dans des cavités de forme conjuguée réalisées circonférentiellement dans le moyeu de support du rotor.

Les moyens d'accouplement comprennent en outre une couronne rigide métallique comprenant d'un côté des éléments prismatiques à bases rectangulaires faisant saillie en direction axiale en étant circonférentiellement espacés de façon équidistante et s'encastrant respectivement dans les éléments creux de la couronne en élastomère de l'autre côté de cette dernière. La couronne métallique est fixée, par son côté opposé aux éléments saillants, à un couvercle d'embrayage par l'intermédiaire de rivets, le couvercle d'embrayage étant lui-même solidaire en rotation du volant d'inertie par des rivets (EP-A-1 112 884).

Un tel agencement d'accouplement élastique a pour inconvénient majeur que les éléments prismatiques creux de la couronne en matériau élastomère exercent en cas de désalignement du moyeu du rotor et de l'arbre vilebrequin une force radiale s'appliquant sur le palier à roulement à billes par lequel peut tourner le rotor et son moyeu de la machine électrique, pouvant provoquer à la longue une détérioration de ce palier.

La présente invention a pour but d'éliminer l'inconvénient ci-dessus en proposant un dispositif d'accouplement élastique entre le rotor d'une machine électrique tournante réversible et l'arbre vilebrequin d'un moteur thermique d'un groupe motopropulseur d'un véhicule automobile, le rotor étant solidaire d'un moyeu monté coaxialement à l'arbre vilebrequin entraînant en rotation un volant d'inertie auquel est solidarisé en rotation un couvercle d'embrayage relié au moyeu par des moyens d'accouplement élastiques, et qui est caractérisé en ce que les moyens d'accouplement comprennent un manchon d'accouplement en forme de soufflet interposé entre le moyeu du rotor et le couvercle d'embrayage et présentant une souplesse radiale permettant de compenser un désalignement entre le rotor et l'arbre vilebrequin, et une rigidité élevée en torsion.

De préférence, les plis du soufflet du manchon d'accouplement sont axialement jointifs de façon qu'en position de montage, le manchon d'accouplement soit rigide axialement.

Le manchon d'accouplement est solidaire, à une extrémité, d'une couronne extérieurement dentée en engrènement dans une armature annulaire fixée coaxialement au couvercle d'embrayage et, à l'autre extrémité, d'une plaque annulaire fixée dans le moyeu du rotor coaxialement à celui-ci.

Avantageusement, le manchon d'accouplement a son extrémité cylindrique solidaire par brasage de la surface périphérique interne de la couronne dentée et son autre extrémité annulaire solidaire par brasage de la face latérale correspondante de la plaque annulaire.

L'armature annulaire est fixée au couvercle d'embrayage par des rivets s'étendant concentriquement à l'axe de révolution du couvercle d'embrayage.

La plaque annulaire est fixée à une paroi transversale de fond du moyeu par des vis de fixation s'étendant concentriquement à l'axe de révolution du moyeu.

La plaque annulaire est positionnée angulairement relativement au moyeu par au moins une goupille cylindrique solidaire de la paroi de fond du moyeu, s'étendant axialement et traversant un perçage de la plaque annulaire.

La couronne dentée est positionnée angulairement relativement à l'armature annulaire par au moins un ergot solidaire de la surface périphérique externe de la couronne dentée entre deux dents de celle-ci.

Selon une variante de réalisation, le manchon d'accouplement est réalisé à partir d'une matière plastique à fibres de verre.

Selon une autre variante de réalisation, le manchon d'accouplement est métallique.

Les moyens d'accouplement comprenant la plaque annulaire, le manchon à soufflet, la couronne dentée et l'armature annulaire sont logés dans le moyeu du rotor.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels:
- la figure 1 est une vue en coupe longitudinale d'un carter d'embrayage faisant partie d'un groupe motopropulseur de véhicule automobile et dans lequel est logé le dispositif d'accouplement conforme à l'invention;
- la figure 2 est une vue en perspective éclatée du dispositif d'accouplement de l'invention;
- la figure 3 est une vue de côté suivant la flèche III de la figure 2 du dispositif d'accouplement en position assemblée;
- la figure 4 est une vue en coupe suivant la ligne IV-IV de la figure 3;
- la figure 5 est une vue en section suivant la ligne V-V de la figure 3;
- la figure 6 est une vue en perspective d'un composant du dispositif d'accouplement de la figure 2;
- la figure 7 est une vue de face suivant la flèche VII de la figure 2;
- la figure 8 est une vue en coupe suivant la ligne VIII-VIII de la figure 7;
- la figure 9 est une vue agrandie de la partie cerclée en IX de la figure 8; et
- la figure 10 est une vue agrandie de la partie cerclée en X de la figure 8.

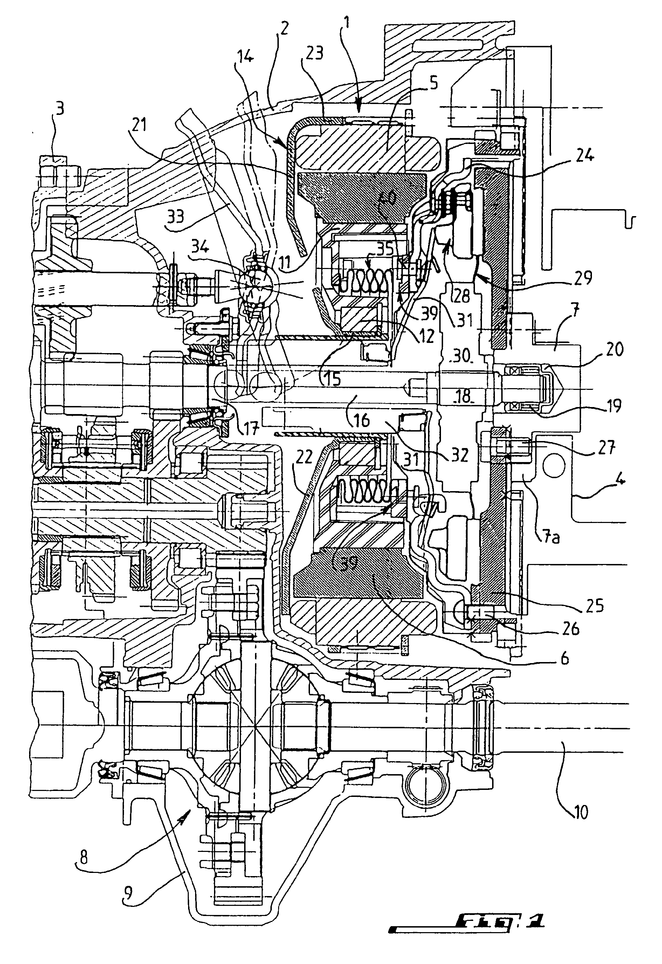

En se reportant tout d'abord à la figure 1, la référence 1 désigne une machine électrique ou alternateur-démarreur, logée dans un carter d'embrayage 2 fixé entre le carter 3 de boîte de vitesses et le carter 4 du moteur thermique faisant partie du groupe motopropulseur d'un véhicule automobile. La machine électrique 1 formant à la fois alternateur et démarreur de véhicule est connue en soi et est, par exemple, décrite dans la demande de brevet internationale WO 99/22955.

Cette machine comprend essentiellement un stator annulaire 5 fixe relativement au carter d'embrayage 2 et un rotor annulaire 6 logé dans le stator fixe 5 en définissant par rapport à ce dernier un entrefer.

Le rotor 6 est entraîné en rotation par l'arbre vilebrequin 7 du moteur thermique comme on le verra ultérieurement.

Les différents composants situés dans la boîte de vitesses 3 sont déjà connus en soi et n'ont pas besoin d'être décrits à part que la référence 8 désigne le différentiel du véhicule logé dans un carter 9 et que l'axe de roue porte la référence 10.

Le rotor 6 est fixé sur un moyeu de support 11 lui-même monté à rotation sur un palier 12, tel qu'un roulement à billes.

L'ensemble constitué par le stator 5, le rotor 6, le moyeu 11 et le palier 12 est logé dans un carter indépendant 14 fixé au carter d'embrayage 2 par des vis de fixation (non représentées) de façon que le carter 14 soit logé dans le carter d'embrayage 2 en étant espacé de ce dernier.

Le carter 14 comprend une partie centrale tubulaire 15 entourant coaxialement un arbre de liaison 16 de l'arbre d'entrée 17 de la boîte de vitesses à un arbre auxiliaire 18 solidaire de l'arbre 16 coaxialement à celui-ci et monté à rotation par un palier 19 dans un trou borgne 20 réalisé en bout de l'arbre vilebrequin 7.

Le palier 12 est fixé sur la partie centrale tubulaire 15 du carter 14 qui comprend également une paroi latérale 21 s'étendant perpendiculairement à l'axe de l'arbre vilebrequin 7 et raccordée à la partie centrale tubulaire 15 par une paroi oblique 22. Le carter 14 comprend une paroi circulaire 23 prolongeant la partie supérieure de la paroi latérale 21 en s'étendant perpendiculairement à celle-ci et enserrant le stator 5 sur la surface périphérique circulaire externe de celui-ci.

Le moyeu 11 de support du rotor 6 est relié par l'intermédiaire de moyens d'accouplement à un couvercle d'embrayage 24, qui est solidaire en rotation du volant d'inertie 25 du moteur thermique par des rivets 26, le volant 25 étant solidaire en rotation d'une collerette 7a de l'arbre vilebrequin 7 par l'intermédiaire de vis de fixation 27.

Le volant d'inertie 25 peut être accouplé à l'arbre auxiliaire 18 par un moyen embrayage 28 relié par un accouplement élastique 29 à un moyeu 30 solidaire de l'arbre auxiliaire 18. Le moyen embrayage 28 est commandé par un diaphragme 31 monté concentriquement à l'arbre de liaison 16 et piloté par une butée d'embrayage 32 pour amener le moyen embrayage 28 en position embrayée ou débrayée du volant d'inertie 25 et ainsi accoupler l'arbre d'entrée 17 de la boîte de vitesses à l'arbre vilebrequin 7 ou le désaccoupler de ce dernier. La butée d'embrayage 32 est déplacée par une fourchette de commande 33 montée à rotation au carter d'embrayage 2 par une articulation à rotule 34.

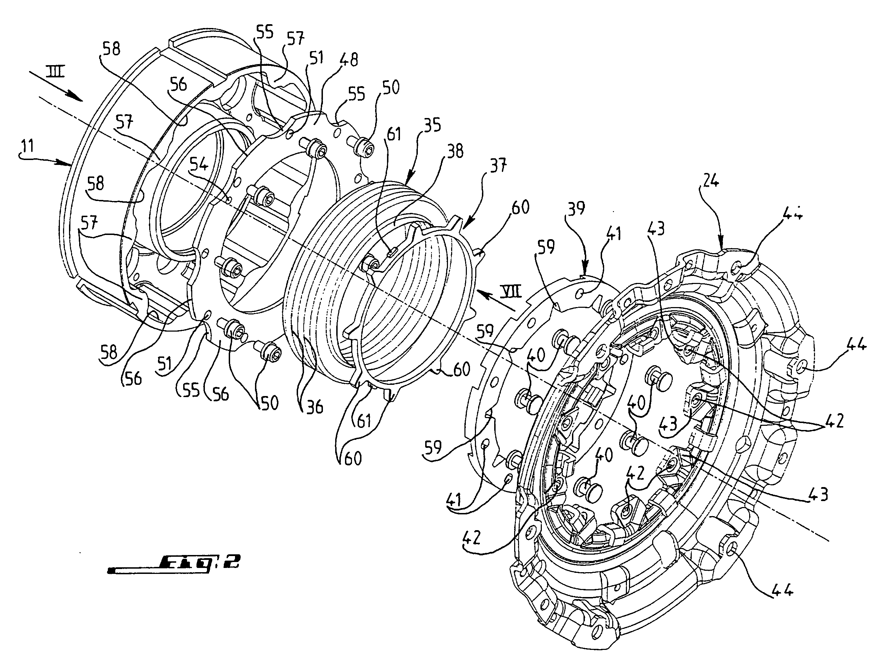

Selon l'invention, et comme cela ressort notamment de la figure 2, les moyens d'accouplement du moyeu 11 au couvercle d'embrayage 24 comprennent tout d'abord un manchon d'accouplement 35 en forme de soufflet présentant une souplesse en direction radiale et interposé entre le moyeu 11 du rotor et l'arbre vilebrequin 7 de façon à compenser tout désalignement susceptible de se produire entre le rotor 11 et l'arbre vilebrequin 7.

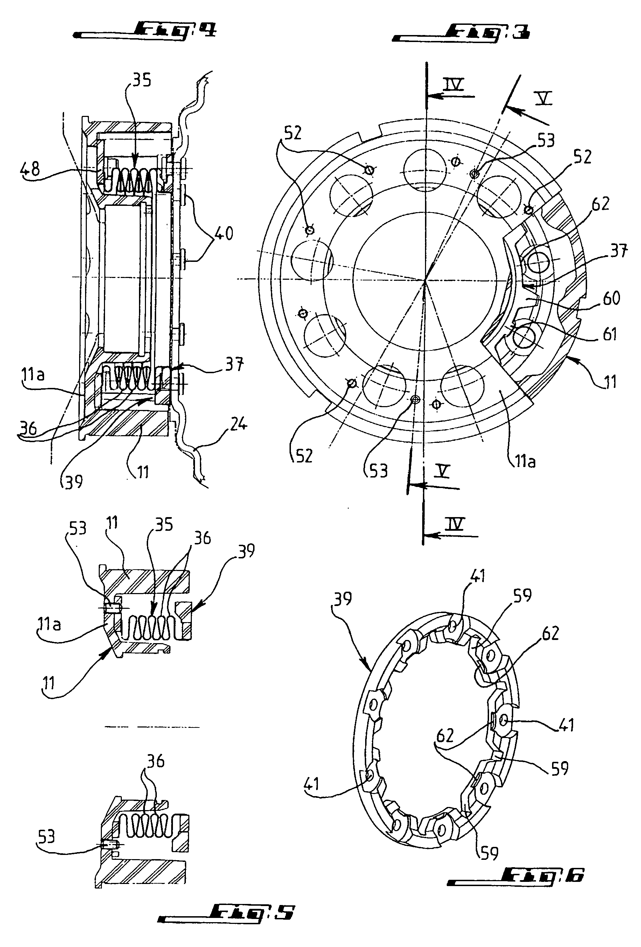

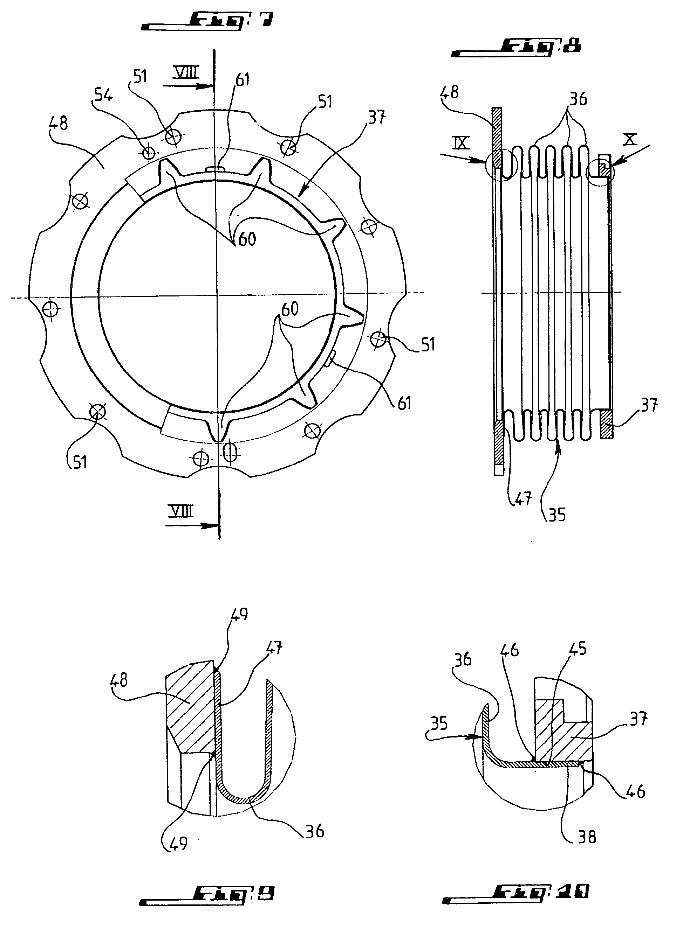

Le manchon d'accouplement 35 possède en outre une rigidité élevée en torsion et les plis 36 du soufflet de ce manchon sont axialement jointifs en position assemblée de ce manchon avec les autres composants des moyens d'accouplement comme cela ressort des figures 4 et 5, de façon que le manchon d'accouplement 35 soit rigide axialement.

Les moyens d'accouplement comprennent en outre une couronne extérieurement dentée 37 solidaire d'une extrémité cylindrique 38 du manchon d'accouplement 35 et en engrènement dans une armature annulaire 39 faisant partie des moyens d'accouplement fixée coaxialement au couvercle d'embrayage 24 par l'intermédiaire de rivets de fixation 40 s'étendant concentriquement sur une même circonférence à l'axe de révolution du couvercle d'embrayage 24 en étant espacés les uns des autres de façon équidistante. Les rivets 40 traversent respectivement des perçages 41 réalisés transversalement au travers de la paroi de l'armature annulaire 39 et des perçages 42 réalisés au travers de pattes radialement internes 43 du couvercle d'embrayage 24 qui présente la forme générale d'une couronne dont le pourtour externe est traversé par des perçages 44 de passage des rivets 26 de fixation du couvercle d'embrayage 24 au volant d'inertie 25.

Comme cela ressort mieux de la figure 10, l'extrémité cylindrique 38 du manchon d'accouplement 35 s'emmanche dans la couronne dentée 37 et est fixée par brasage à la surface périphérique interne 45 de la couronne 37. La figure 10 montre que l'extrémité cylindrique 38 du manchon d'accouplement 35 est fixée à la couronne 37 par deux cordons annulaires de brasure axialement espacés 46.

L'autre extrémité du manchon d'accouplement 35, qui est constituée par l'extrémité plane annulaire 47 du dernier pli 36 du soufflet de ce manchon, est en appui sur une partie correspondante de surface latérale d'une plaque annulaire 48 et est fixée à cette partie de surface par brasage. Comme représenté en figure 9, l'extrémité annulaire 47 du soufflet du manchon 35 est fixée à la plaque 48 par deux cordons de brasure annulaires et concentriques 49.

La plaque 48 est logée concentriquement dans le moyeu 11 en étant fixée à la paroi transversale de fond 11a de ce moyeu par un certain nombre de vis de fixation 50 traversant des perçages correspondants 51 de la plaque 48 réalisés de façon équidistante sur une même circonférence de cette plaque et ancrées respectivement dans des trous taraudés 52 de la paroi de fond 11a du moyeu 11. Ainsi, les vis 50 s'étendent concentriquement à l'axe de révolution du moyeu 11. Au moins une goupille cylindrique 53, dans le cas présent au nombre de deux, sont ancrées dans la paroi transversale de fond 11a du moyeu 11 en faisant saillie dans celui-ci de façon à s'engager respectivement dans deux perçages 54 de la plaque annulaire 48. Les deux goupilles 53 sont disposées sur la paroi de fond 11a du moyeu 11 à une position relative autre que celle diamétralement opposée de façon à positionner angulairement la plaque 48 relativement au moyeu avant serrage de la plaque dans celui-ci par les vis 50. La plaque 48 peut comporter un certain nombre de découpes arquées 55 réalisées sur la périphérie externe de la plaque 48 en définissant entre elles des protubérances arquées 56 s'engageant respectivement dans des protubérances arquées radialement internes 57 et des parties évidées arquées 58 entre protubérances 57 pour assurer un accouplement rigide en rotation de la plaque 48 au moyeu 11 en plus des vis de fixation 50.

L'armature annulaire 39 comporte un certain nombre d'indentations radiales 59 dans lesquelles s'engagent respectivement les dents 60 de la couronne 37 qui comporte sur sa périphérie externe au moins un ergot 61, dans le cas présent au nombre de deux, pouvant s'engager dans une échancrure radiale arquée de forme conjuguée 62 de l'armature 39. Cette dernière comporte plusieurs échancrures 62, chacune située entre deux indentations 59, et les deux ergots 61 s'engagent dans leurs deux échancrures respectives 62 pour permettre un positionnement angulaire de la couronne dentée 37 relativement à l'armature 39 et, ainsi, à la couronne d'embrayage 24. Les deux ergots 61 sont positionnés angulairement l'un par rapport à l'autre sans être diamétralement opposés.

On comprend ainsi que le manchon d'accouplement 35 est positionné angulairement relativement au moyeu 11 et à la couronne d'embrayage 24 de telle façon qu'en position de repos ce manchon ne subisse aucune torsion.

Comme représenté notamment en figure 4, les différents moyens d'accouplement constitués par la plaque 48, le manchon d'accouplement 35, la couronne dentée 37 et l'armature annulaire 39, sont, à leur position assemblée, logés dans le moyeu 11 de façon à constituer un ensemble axialement compact et donc peu encombrant.

En prévoyant dans le dispositif d'accouplement du moyeu 11 au couvercle d'embrayage 24 un manchon d'accouplement déformable radialement, tous mésalignement susceptible de se produire entre l'arbre vilebrequin 7 et le rotor 6 de la machine électrique 1 peut être compensé, évitant ainsi d'exercer des contraintes radiales sur le palier 12 de support en rotation du moyeu 11, augmentant de la sorte la durée de vie de ce palier.

Le manchon d'accouplement 35 peut être réalisé à partir d'une matière plastique à fibres de verre ou, selon une variante, ce manchon peut être métallique.

## Revendications

1. Dispositif d'accouplement élastique entre le rotor (6) d'une machine électrique tournante réversible (1) et l'arbre vilebrequin (7) d'un moteur thermique d'un groupe motopropulseur d'un véhicule automobile, le rotor (6) étant solidaire d'un moyeu (11) monté coaxialement à l'arbre vilebrequin (7) entraînant en rotation un volant d'inertie (25) auquel est solidarisé en rotation un couvercle d'embrayage (24) relié au moyeu (11) par des moyens d'accouplement élastiques, **caractérisé en ce que** les moyens d'accouplement comprennent un manchon d'accouplement (35) en forme de soufflet interposé entre le moyeu (11) du rotor (6) et le couvercle d'embrayage (24) et présentant une souplesse radiale permettant de compenser un désalignement entre le rotor (6) et l'arbre vilebrequin (7) et une rigidité élevée en torsion.

2. Dispositif selon la revendication 1, **caractérisé en ce que** les plis (36) du soufflet du manchon d'accouplement (35) sont axialement jointifs de façon qu'en position de montage, le manchon d'accouplement (35) soit rigide axialement.

3. Dispositif selon la revendication 1 ou 2, **caractérisé en ce que** le manchon d'accouplement (35) est solidaire, à une extrémité, d'une couronne extérieurement dentée (37) en engrènement dans une armature annulaire (39) fixée coaxialement au couvercle d'embrayage (24) et, à l'autre extrémité, d'une plaque annulaire (48) fixée dans le moyeu (11) du rotor (6) coaxialement à celui-ci.

4. Dispositif selon la revendication 3, **caractérisé en ce que** le manchon d'accouplement (35) a son extrémité cylindrique (38) solidaire par brasage de la surface périphérique interne (45) de la couronne dentée (37) et son autre extrémité annulaire (47) solidaire par brasage de la face latérale correspondante de la plaque annulaire (48).

5. Dispositif selon la revendication 3 ou 4, **caractérisé en ce que** l'armature annulaire (39) est fixée au couvercle d'embrayage (24) par des rivets (40) s'étendant concentriquement à l'axe de révolution du couvercle d'embrayage (24).

6. Dispositif selon l'une des revendications 3 à 5, **caractérisé en ce que** la plaque annulaire (48) est fixée à une paroi transversale de fond (11a) du moyeu (11) par des vis de fixation (50) s'étendant concentriquement à l'axe de révolution du moyeu (11).

7. Dispositif selon la revendication 6, **caractérisé en ce que** la plaque annulaire (48) est positionnée angulairement relativement au moyeu (11) par au moins une goupille cylindrique (53) solidaire de la paroi de fond (11a) du moyeu (11), s'étendant axialement et traversant un perçage (54) de la plaque annulaire (48).

8. Dispositif selon l'une des revendications 3 à 7, **caractérisé en ce que** la couronne dentée (37) est positionnée angulairement relativement à l'armature annulaire (39) par au moins un ergot (61) solidaire de la surface périphérique externe de la couronne dentée (37) entre deux dents (60) de celle-ci.

9. Dispositif selon l'une des revendications précédentes, **caractérisé en ce que** le manchon d'accouplement (35) est réalisé à partir d'une matière plastique à fibres de verre.

10. Dispositif selon l'une des revendications 1 à 8, **caractérisé en ce que** le manchon d'accouplement (35) est métallique.

11. Dispositif selon l'une des revendications précédentes, **caractérisé en ce que** les moyens d'accouplement comprenant la plaque (48), le manchon (35), la couronne dentée (37) et l'armature annulaire (39), sont logés dans le moyeu (11).

12. Dispositif selon l'une des revendications précédentes, **caractérisé en ce qu'**il est logé dans le carter d'embrayage (2) du groupe motopropulseur.

## Claims

1. Elastic coupling device between the rotor (6) of a reversible rotating electrical machine (1) and the crankshaft (7) of a heat engine of a power train of a motor vehicle, the rotor (6) being firmly attached to a hub (11) coaxially mounted on the crankshaft (7) driving into rotation an inertial flywheel (25) to which is firmly attached in rotation a clutch cover (24) connected to the hub (11) by elastic coupling means, **characterized in that** the coupling means comprise a coupling sleeve (35) as bellows interposed between the hub (11) of the rotor (6) and the clutch cover (24) and having radial flexibility providing compensation for misalignment between the rotor (6) and the crankshaft (7) and high torsional stiffness.

2. The device according to claim 1, **characterized in that** the folds (36) of the bellows of the coupling sleeve (35) are axially joined so that in the mounting position, the coupling sleeve (35) is axially stiff.

3. The device according to claim 1 or 2, **characterized in that** the coupling sleeve (35) is firmly attached, at one end to an externally toothed crown (37) meshed with an annular frame (39) coaxially attached to the clutch cover (24) and, at the other end, to an annular plate (48) attached in the hub (11) or the rotor (6) coaxially to the latter.

4. The device according to claim 3, **characterized in that** the coupling sleeve (35) has its cylindrical end (38) firmly attached by brazing to the internal peripheral surface (45) of the toothed crown (37) and its other annular end (47) firmly attached by brazing to the corresponding side face of the annular plate (48).

5. The device according to claim 3 or 4, **characterized in that** the annular frame (39) is attached to the clutch cover (24) by rivets (40) extending concentrically to the axis of revolution of the clutch cover (24).

6. The device according to any of claims 3 to 5, **characterized in that** the annular plate (48) is attached to a bottom transverse wall (11a) of the hub (11) by fixing screws (50) extending concentrically to the axis of revolution of the hub (11).

7. The device according to claim 6, **characterized in that** the annular plate (48) is angularly positioned relatively to the hub (11) by at least one cylindrical pin (53) firmly attached to the bottom wall (11a) of the hub (11), extending axially and passing through a bore (54) of the annular plate (48).

8. The device according to any of claims 3 to 7, **characterized in that** the toothed crown (37) is angularly positioned relatively to the annular frame (39) by at least one lug (61) firmly attached to the external peripheral surface of the toothed crown (37) between two teeth (60) of the latter.

9. The device according to any of the preceding claims, **characterized in that** the coupling sleeve (35) is made from plastic material with glass fibers.

10. The device according to any of claims 1 to 8, **characterized in that** the coupling sleeve (35) is metal.

11. The device according to any of the preceding claims, **characterized in that** the coupling means comprising the plate (48), the sleeve (35), the toothed crown (37) and the annular frame (39), are housed in the hub (11).

12. The device according to any of the preceding claims, **characterized in that** it is housed in the clutch housing (2) of the power train.

## Patentansprüche

1. Nachgiebige Kupplung zur Verbindung des Rotors (6) einer elektrischen umsteuerbar drehenden Maschine (1) mit der Kurbelwelle (7) eines Verbrennungsmotors einer Motorenanlage eines Kraftfahrzeugs, wobei der Rotor (6) mit einer Nabe (11) verbunden ist, die koaxial zur Kurbelwelle (7) montiert ist, die ein Schwungrad (25) drehend antreibt, mit dem eine Kupplungsabdeckung (24) drehend verbunden ist, die mit der Nabe (11) durch nachgiebige Kupplungsmittel verbunden ist, **dadurch gekennzeichnet, dass** die Kupplungsmittel eine balgförmige Kupplungsmuffe (35) umfassen, die zwischen der Nabe (11) des Rotors (6) und der Kupplungsabdeckung (24) angeordnet ist und eine radiale Elastizität aufweist, mit der eine Dejustierung zwischen dem Rotor (6) und der Kurbelwelle (7) kompensierbar ist und eine erhöhte Verdrehungssteifigkeit.

2. Vorrichtung nach Anspruch 1, **dadurch gekennzeichnet, dass** die Falten (36) des Balgs der Kupplungsmuffe (35) axial nebeneinander liegen, so dass die Kupplungsmuffe (35) in Montageposition axial starr ist.

3. Vorrichtung nach Anspruch 1 oder 2, **dadurch gekennzeichnet, dass** die Kupplungsmuffe (35) an einem Ende mit einem außen gezahnten Rad (37) verbunden ist, das in einen ringförmigen Beschlag (39) eingreift, der koaxial mit der Kupplungsabdeckung (24) verbunden ist, und am anderen Ende mit einer ringförmigen Platte (48), die in der Nabe (11) des Rotors (6) koaxial dazu befestigt ist.

4. Vorrichtung nach Anspruch 3, **dadurch gekennzeichnet, dass** die Kupplungsmuffe (35) an ihrem zylindrischen Ende (38) durch Löten mit der inneren Umfangsfläche (45) des Zahnrads (37) und an ihrem anderen ringförmigen Ende (47) durch Löten mit der entsprechenden seitlichen Fläche der ringförmigen Platte (48) verbunden ist.

5. Vorrichtung nach Anspruch 3 oder 4, **dadurch gekennzeichnet, dass** der ringförmige Beschlag (39) an der Kupplungsabdeckung (24) anhand von Nieten (40) befestigt ist, die sich konzentrisch zur Rotationsachse der Kupplungsabdeckung (24) erstrecken.

6. Vorrichtung nach einem der Ansprüche 3 bis 5, **dadurch gekennzeichnet, dass** die ringförmige Platte (48) an einer seitlichen Grundplatte (11a) der Nabe (11) anhand von Befestigungsschrauben (50) befestigt ist, die sich konzentrisch zur Rotationsachse der Nabe (11) erstrecken.

7. Vorrichtung nach Anspruch 6, **dadurch gekennzeichnet, dass** die ringförmige Platte (48) winklig im Verhältnis zur Nabe (11) durch mindestens einen zylindrischen Stift (53) positioniert ist, der mit der Grundplatte(11a) der Nabe (11) verbunden ist, wobei sich dieser axial erstreckt und eine Bohrung (54) der ringförmigen Platte (48) durchquert.

8. Vorrichtung nach einem der Ansprüche 3 bis 7, **dadurch gekennzeichnet, dass** das Zahnrad (37) winklig im Verhältnis zum ringförmigen Beschlag (39) durch mindestens einen Vorsprung (61) positioniert ist, der mit der äußeren Umfangsfläche des Zahnrads (37) zwischen zwei Zähnen (60) desselben verbunden ist.

9. Vorrichtung nach einem der vorhergehenden Ansprüche, **dadurch gekennzeichnet, dass** die Kupplungsmuffe (35) aus einem Kunststoff mit Glasfasern gefertigt ist.

10. Vorrichtung nach einem der Ansprüche 1 bis 8, **dadurch gekennzeichnet, dass** die Kupplungsmuffe (35) aus Metall ist.

11. Vorrichtung nach einem der vorhergehenden Ansprüche, **dadurch gekennzeichnet, dass** die die Platte (48), die Muffe (35), das Zahnrad (37) und den ringförmigen Beschlag (39) umfassenden Kupplungsmittel in der Nabe (11) untergebracht sind.

12. Vorrichtung nach einem der vorhergehenden Ansprüche, **dadurch gekennzeichnet, dass** sie im Kupplungsgehäuse (2) der Motorenanlage untergebracht ist.
